# EUROPEAN PATENT SPECIFICATION

(11) **EP 4 443 836 B1**
(45) Date of publication and mention of the grant of the patent: **04.03.2026**
(21) Application number: 23166651.2
(22) Date of filing: 04.04.2023
(51) Int. Cl.: H04L 41/14, H04L 41/5009, H04L 41/50, H04L 43/0876

(54) **METHOD FOR USING A SERVICE ENABLER ARCHITECTURE LAYER FOR VERTICALS, SEAL, IN A VERTICAL APPLICATION LAYER, VAL, IMPLEMENTATION, SYSTEM OR TELECOMMUNICATIONS NETWORKS, NETWORK SLICE CAPABILITY ENABLEMENT SERVER OR APPLICATION DATA ANALYTICS ENABLEMENT SERVER, PROGRAM AND COMPUTER-READABLE MEDIUM**
VERFAHREN ZUR VERWENDUNG EINER DIENSTFREIGABE-ARCHITEKTURSCHICHT FÜR VERTIKAL-, SIEGEL-, VAL-, IMPLEMENTIERUNGS-, SYSTEM- ODER TELEKOMMUNIKATIONSNETZE
SERVEUR D'ACTIVATION DE DONNÉES D'APPLICATION, PROGRAMME ET SUPPORT LISIBLE PAR ORDINATEUR

(43) Date of publication of application: 09.10.2024
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- "3rd Generation Partnership Project; Technical Specification Group Services and System Aspects; Procedures for Application Data Analytics Enablement Service; (Release 18)", no. V0.4.0, 8 March 2023 (2023-03-08), pages 1 - 53, XP052283944, Retrieved from the Internet <URL:https://ftp.3gpp.org/Specs/archive/23_series/23.436/23436-040.zip 23436-040-rm.docx> [retrieved on 20230308]
- BERNT MATTSSON ET AL: "Slice configuration analytics and prediction", vol. 3GPP SA 6, no. Athens, GR; 20230227 - 20230303, 4 March 2023 (2023-03-04), XP052251979, Retrieved from the Internet <URL:https://www.3gpp.org/ftp/tsg_sa/WG6_MissionCritical/TSGS6_053_Athens/Docs/S6-230846.zip S6-230846_was_S6-230621_Slice configuration analytics and prediction-u.doc> [retrieved on 20230304]

## Description

### BACKGROUND

The present invention relates a method for using a service enabler architecture layer for verticals, SEAL, in a vertical application layer implementation, VAL implementation, for providing communication services to a user equipment, using a vertical application layer server via a telecommunications network, for supporting and providing slice usage statistics data regarding at least one network slice, wherein the user equipment is a vertical application layer user equipment comprising a vertical application layer client, VAL client, and an application data analytics enablement client, wherein the service enabler architecture layer for verticals comprises an application data analytics enablement server and a network slice capability enablement server being responsible for or related to the at least one network slice.

Additionally, the present invention relates to a system for using a service enabler architecture layer for verticals, SEAL, in a vertical application layer implementation, VAL implementation, for providing communication services to a user equipment, using a vertical application layer server via the telecommunications network, for supporting and providing slice usage statistics data regarding at least one network slice, wherein the user equipment is a vertical application layer user equipment comprising a vertical application layer client, VAL client, and an application data analytics enablement client, wherein the service enabler architecture layer for verticals comprises an application data analytics enablement server and a network slice capability enablement server being responsible for or related to the at least one network slice.

Furthermore, the present invention relates to a program and to a computer-readable medium for using a user equipment in the framework of service enabler architecture layer for verticals according to the inventive method.

In conventionally known telecommunications networks, it is known to use a user equipment with a telecommunications network in relation to or in the framework of service enabler architecture layer for verticals, service enabler architecture layer for verticals, with standardization document TR 23.700-36 having been finalized regarding application architecture aspects, solutions and enhancements to service enabler architecture layer for verticals for application data analytics enablement service. This study identifies the application enabling layer platform architecture, capabilities, and services to support data analytics enablement at the application layer. In this context, an application data analytics enablement server, ADAES server, (being a part of service enabler architecture layer for verticals, SEAL) typically has connectivity with an operations and maintenance, OAM, entity or functionality and a network exposure function, NEF, of an involved 3GPP mobile communication network, and is typically able to provide - based on interaction via these interfaces - additional functionality towards the analytics customer, i.e. an entity or functionality that acts as service consumer of services provided by such an application data analytics enablement server.

However, in conventionally known mobile communication networks, while the application data analytics enablement server architecture is able to store historical data, especially in case that specific statistics information or performance or failure information is needed for a certain time window in the past, such information is not able to be provided according to the conventionally known framework of service enabler architecture layer for verticals, especially in case that a service consumer of services provided by an application data analytics enablement server is not provided with data storage for storing (regarding past time intervals) specific notifications; hence, once a specific check is needed - e.g. in case that a customer of an application service provider has complained about service degradation -, there is no possibility for such a service consumer to perform such a check.

3GPP Technical Specification TS 23.436 (Release 18, March 2023) set out the architecture, procedures, information flows and APIs for the Application Data Analytics Enablement (ADAE) Service within SEAL. However, it remains an open question how to modify the analytics framework introduced in TS 23.436 so that a VAL service can obtain, on demand and with minimal overhead, a correlated diagnostics report that explains a detected slice-related service degradation.

### SUMMARY

An object of the present invention is to provide a technically simple, effective and cost-effective solution for using a service enabler architecture layer for verticals, SEAL, in a vertical application layer implementation, VAL implementation, for providing communication services to a user equipment, using a vertical application layer server via a telecommunications network, especially for supporting and providing slice usage statistics data regarding at least one network slice. A further object of the present invention is to provide a corresponding system or a corresponding telecommunications networks or a corresponding network slice capability enablement server or a corresponding application data analytics enablement server or a corresponding user equipment, and a corresponding program and computer-readable medium.

The object of the present invention is achieved by a method according to claim 1.

Furthermore, it is advantageously possible and preferred according to the present invention that the first and second steps involve using, as an interface of or towards the application data analytics enablement server, an interface according to an SEAL-X reference point.

It is thereby advantageously possible to realize and implement the inventive method in a comparatively simple and efficient manner.

According to the present invention, it is furthermore advantageously possible and preferred that the first and second steps involve using at least part of the following information elements between the application data analytics enablement service consumer and the application data analytics enablement server:
-- as mandatory parts of the slice usage statistics data request: a consumer identifier information, a slice usage statistics data identifier information, a vertical application layer service identifier information, a network slice identifier information, a start time information, and an end time information,
-- as mandatory parts of the slice usage statistics data response: a result information, a slice usage statistics data identifier information, and a network slice identifier information,
-- as optional parts of the slice usage statistics data request: a network slice-related parameter information, a data network name information, a user equipment-related identifier information, and an area of interest information,
-- as optional parts of the slice usage statistics data response: a data output information, and a failure cause information.

It is thereby advantageously possible to realize and implement the inventive method in a comparatively simple and efficient manner.

Furthermore, it is advantageously possible and preferred according to the present invention that, in a third step subsequent to the first step and preceding the second step, the application data analytics enablement server transmits, to a A-ADRF, a network slice data retrieval request in order to be provided with the requested data, and the A-ADRF transmits, to the application data analytics enablement server, a network slice data retrieval response in order to provide the requested data to the application data analytics enablement server.

It is thereby advantageously possible to efficiently realize and implement the inventive method in a comparatively simple and flexible manner.

Furthermore, the present invention relates to a system according to claim 5.

Additionally, the present invention relates to a program according to claim 6.

Additionally, the present invention relates to a computer-readable medium according to claim 7.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

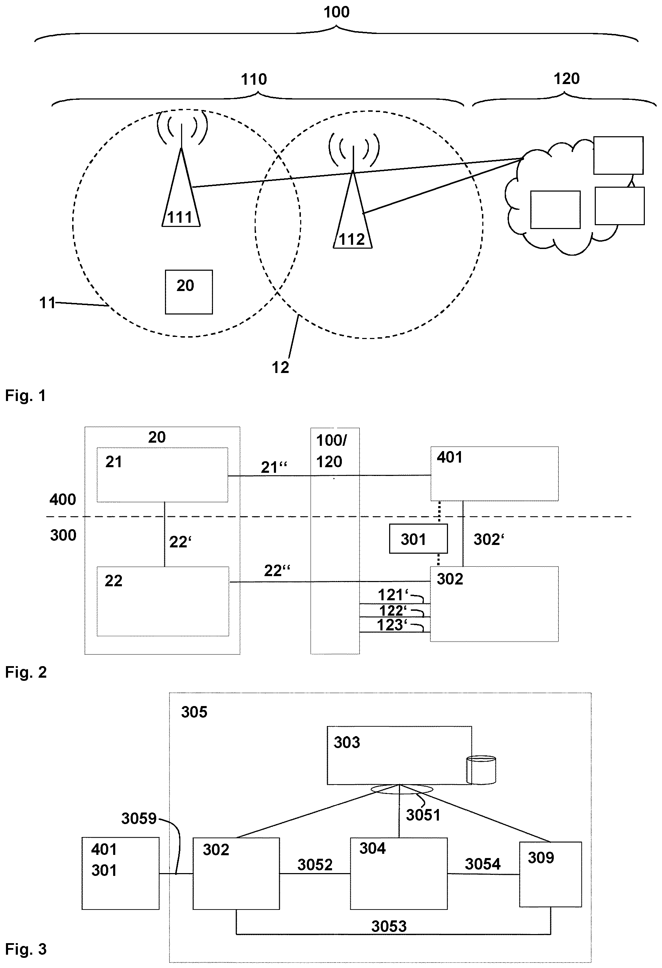

Figure 1 schematically illustrates a telecommunications network, comprising an access network and a core network, and a user equipment, wherein a service enabler architecture layer for verticals, SEAL, is used in a vertical application layer (VAL) implementation for providing communication services to a user equipment, using a vertical application layer server via the telecommunications network, especially for supporting and providing slice usage statistics data regarding at least one network slice; the user equipment is a vertical application layer user equipment comprising a vertical application layer (VAL) client and an application data analytics enablement client, and the service enabler architecture layer for verticals comprises an application data analytics enablement server and a network slice capability enablement server being responsible for or related to the at least one network slice.
Figure 2 schematically illustrates a representation of an exemplary implementation of the service enabler architecture layer for verticals for supporting and providing slice usage statistics data regarding at least one network slice with the user equipment being a vertical application layer user equipment comprising the vertical application layer (VAL) client and the application data analytics enablement client, and the service enabler architecture layer for verticals comprising the application data analytics enablement server and the network slice capability enablement server.
Figure 3 schematically illustrates a representation of an exemplary application data analytics enablement architecture illustrating the application data analytics enablement framework (and especially realized as part of a data network or a data edge network), comprising - besides the application data analytics enablement server - an application layer-data collection and coordination function, A-DCCF, an application layer-analytics and data repository function, A-ADRF, as well as data sources.

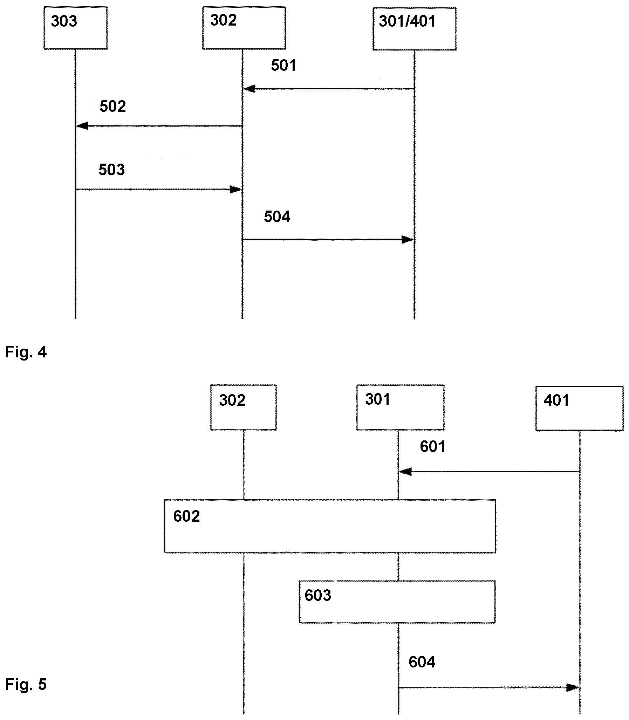

Figure 4 schematically illustrates a communication diagram between the application layer-data collection and coordination function, the application data analytics enablement server, and an application data analytics enablement service consumer entity.
Figure 5 schematically illustrates a communication diagram between the application data analytics enablement server, the network slice capability enablement server, and the vertical application layer server.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a user equipment 20 is schematically shown. A service enabler architecture layer for verticals, SEAL, is used in a vertical application layer (VAL) implementation for providing communication services to the user equipment 20, using a vertical application layer server (not explicitly and separately shown in Figure 1) via the telecommunications network 100, especially for supporting and providing slice usage statistics data regarding at least one network slice.

The user equipment 20 uses services provided by a vertical application layer, VAL, service provider domain or network slice capability enabler service provider being typically (but not necessarily) external to the telecommunications network 100, wherein the network slice capability enabler service provider comprises at least one network slice capability enablement server (not explicitly and separately shown in Figure 1) to provide services to the user equipment 20, especially using the telecommunications network 100.

The telecommunications network 100 is especially realized as mobile (cellular) communication network 100. The telecommunications network 100, especially its core network 120, typically comprises a number of network functions or services that are, however and for the sake of simplification, not explicitly and separately indicated, in Figure 1, by means of reference signs. The access network 110 of the telecommunications network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the telecommunications network 100) is connected, via a radio interface or air interface, to the first base station entity 111 of the access network 110 of the telecommunications network 100.

According to the present invention, the user equipment 20 is a vertical application layer user equipment 20, especially comprising a vertical application layer client (VAL client) - not explicitly and separately shown in Figure 1 by means of a reference sign - and an application data analytics enablement client (application data analytics enablement client) - likewise not separately shown in Figure 1 by means of a reference sign.

Furthermore, the user equipment 20 is typically, but not necessarily, mobile - i.e. able to move - with respect to the - typically, but not necessarily, static - radio cells 11, 12 or corresponding base station entities 111, 112 of the access network 110.

Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

According to the present invention, it is advantageously possible to use the user equipment 20 in relation to or in the framework of service enabler architecture layer for verticals, SEAL, with the telecommunications network 100.

Typically, the telecommunications network 100 provides the user equipment 20 to use at least one (specific) network slice.

In Figure 2, a representation of an exemplary implementation of the service enabler architecture layer for verticals 300 and the vertical application layer 400, as well as their respective components and/or entities or functionalities - especially for supporting and providing slice usage statistics data regarding the at least one (specific) network slice -, is schematically shown. The user equipment 20 is represented as a vertical application layer user equipment 20 comprising the vertical application layer (VAL) client 21 and the application data analytics enablement client 22, and the service enabler architecture layer for verticals 300 comprising the application data analytics enablement server 302 as well as the network slice capability enablement server 301. Between the vertical application layer (VAL) client 21 (of the user equipment 20) and the application data analytics enablement client 22 (of the user equipment 20), an interface or reference point 22' is realized, especially of the type ADAE-C (application data analytics enablement-client)

Between the vertical application layer server 401 and the vertical application layer (VAL) client 21 (of the user equipment 20), an interface or reference point 21" is realized, especially of the type VAL-UU; furthermore, between the application data analytics enablement client 22 and the application data analytics enablement server 302, an interface or reference point 22" is realized, especially of the type ADAE-UU.

The application data analytics enablement server 302, acting as application function (AF), especially communicates with the telecommunications network 100, especially its core network 120, i.e., typically, 5G core network functions, over the following interfaces or reference points towards network functions or services of the core network 120 (that are not explicitly shown in Figure 2):
-- an N33 reference point 121' to an network exposure function, NEF, of the core network 120,
-- an N6 reference point 122' to an user plane function, UPF, of the core network 120, and
-- an ADAE-OAM interface or reference point 123' to an operations and maintenance, OAM, entity or functionality of the core network 120.

According to one interpretation of the representation schematically shown in Figure 2 (schematically represented, in Figure 2, by means of a drawn-through line between the vertical application layer server 401 and the application data analytics enablement server 302), the vertical application layer server 401 is able to be understood - according to one situation, scenario or embodiment according to the present invention - as a vertical application layer application data analytics enablement service customer. According to such a situation, scenario or embodiment, between the vertical application layer server 401 and the application data analytics enablement server 302, an interface or reference point 302' is realized, especially of the type ADAE-S (application data analytics enablement-server).

Hence, according to such an interpretation of Figure 2, the vertical application layer server 401 (or the vertical application layer servers) communicates with the application data analytics enablement server 302 over the ADAE-S reference point 302'.

According to another interpretation of the representation schematically shown in Figure 2 (schematically represented, in Figure 2, by means of a dotted line between the vertical application layer server 401 and the application data analytics enablement server 302, via the network slice capability enablement server 301, and corresponding to communication diagram shown in Figure 5), the vertical application layer server 401 does not (directly) act as application data analytics enablement service consumer entity, i.e. it does not interact directly with the application data analytics enablement server 302 but it interacts with the network slice capability enablement server 301, and it is the network slice capability enablement server 301 that acts as application data analytics enablement service consumer entity towards the application data analytics enablement server 302. According to such an interpretation, the vertical application layer server 401 uses an NSCE-S reference point (or interface) towards the network slice capability enablement server 301 (not explicitly shown in Figure 2), and the network slice capability enablement 301 especially uses a SEAL-X reference point (or interface) towards the application data analytics enablement server 302.

Especially in case of the vertical application layer server 401 interacting with the application data analytics enablement server 302 via the network slice capability enablement server 301, it is the network slice capability enablement server 301 that provides the interfaces towards the network functions or services of the telecommunications network 100 (that are not explicitly shown in Figure 2), especially its core network 120. I.e. in this case, it is the network slice capability enablement server 301 (instead of the application data analytics enablement server 302 as represented in Figure 2) that provides the N33 reference point 121' (to the network exposure function, NEF, of the core network 120), the N6 reference point 122' to the user plane function, UPF, of the core network 120, and an NSCE-OAM interface or reference point (instead of the ADAE-OAM interface or reference point 123' as shown in Figure 2) to an operations and maintenance, OAM, entity or functionality of the core network 120. In such a case, especially, the user equipment 20 or vertical application layer user equipment 20, would - instead of, or in addition to, the application data analytics enablement client 22 - comprise a network slice capability enablement client, and would - likewise instead of, or in addition to, the interface or reference point 22" being realized of the type ADAE-UU - comprise, or realize an interface (or reference point) of the type NSCE-UU towards the network slice capability enablement server 301.

According to a first embodiment of the present invention, the vertical application layer server 401 might (especially regarding its communication with the application data analytics enablement server 302 or regarding application data analytics enablement data) exclusively be used according to the interpretation of Figure 2 corresponding to the drawn-through line between the vertical application layer server 401 and the application data analytics enablement server 302, in which case the vertical application layer server 401 acts as a vertical application layer application data analytics enablement service customer (and, especially, does not interact - regarding application data analytics enablement data - via the network slice capability enablement 301); furthermore, according to a second embodiment of the present invention, the vertical application layer server 401 might (especially regarding its communication with the application data analytics enablement server 302 or regarding application data analytics enablement data) exclusively be used according to the interpretation of Figure 2 corresponding to the dotted line between the vertical application layer server 401 and the application data analytics enablement server 302, i.e. via the network slice capability enablement server 301, in which case the vertical application layer server 401 does not (directly) act as application data analytics enablement service consumer entity; furthermore, according to a third embodiment of the present invention, the vertical application layer server 401 might (especially regarding its communication with the application data analytics enablement server 302 or regarding application data analytics enablement data) be used according to both interpretations of Figure 2, i.e. corresponding both to the drawn-through line and to the dotted line between the vertical application layer server 401 and the application data analytics enablement server 302.

It is to be understood, that a plurality of vertical application layer servers (corresponding to the vertical application layer server 401) are able to be present and part of the vertical application layer 400 (but are not represented in Figure 2 for the sake of simplicity).

In Figure 3, a representation of an exemplary application data analytics enablement architecture 305 is shown, illustrating the application data analytics enablement framework and especially realized as part of a data network or a data edge network. The application data analytics enablement architecture 305, of course, comprises the application data analytics enablement server 302; besides the application data analytics enablement server 302, the application data analytics enablement architecture 305 comprises an application layer-data collection and coordination function, A-DCCF, 304, an application layer-analytics and data repository function, A-ADRF, 303, (comprising analytics and collected data especially relating to the performance and/or service level of one or a plurality of network slices, especially the (specific) network slice) as well as one or a plurality of further data sources 309. The application data analytics enablement architecture 305 (or the application data analytics enablement server 302) provides its services to an application data analytics enablement service consumer entity. Examples of such an application data analytics enablement service consumer entity especially include, in the context of the present invention, the network slice capability enablement server 301 and the vertical application layer server 401. Thus, according to the present invention, it is advantageously possible that the application data analytics enablement server 302 supports and/or provides slice usage statistics data towards the application data analytics enablement service consumer entity 401, 301, i.e. - typically - the network slice capability enablement server 301 and/or the vertical application layer server 401. Such application data analytics enablement service consumer entity 401, 301 is especially connected to the application data analytics enablement architecture 305 (or to the application data analytics enablement server 302) by means of using an interface or a reference point 3059 which especially corresponds to (or is of the type of) an ADAE-S (application data analytics enablement-server) - especially in case the data analytics enablement service consumer entity 401, 301 being a vertical application layer server 401 - and which especially corresponds to (or is of the type of) an ADAE-X or SEAL-X - especially in case the data analytics enablement service consumer entity 401, 301 being a network slice capability enablement server 301.

Between, on the one hand, the application layer-analytics and data repository function, A-ADRF, 303, and, on the other hand, the application data analytics enablement server 302, the application layer-data collection and coordination function, A-DCCF, 304, as well as the data source or data sources 309, an interface or reference point 3051 is realized, especially of the type A-ADRF-1.

Between the application data analytics enablement server 302 and the application layer-data collection and coordination function, A-DCCF, 304, an interface or reference point 3052 is realized, especially of the type ADAE-X; furthermore, between the application data analytics enablement server 302 and the data source(s) 309, an interface or reference point 3053 is realized, especially of the type ADAE-Y. Additionally, between the application layer-data collection and coordination function, A-DCCF, 304

In Figure 4, a communication diagram between the application layer-data collection and coordination function 303, the application data analytics enablement server 302, and the application data analytics enablement service consumer entity 301, 401 is schematically shown in order to illustrate the method according to the present invention. As already said, the application data analytics enablement service consumer entity 401, 301 is especially either the network slice capability enablement server 301 or it is the vertical application layer server 401 (or one of a plurality of such vertical application layer servers 401) or it is both a network slice capability enablement server 301 and a vertical application layer server 401.

In a first processing step 501, the application data analytics enablement service consumer entity 301, 401 transmits a (network) slice usage statistics data request (or a (network) slice usage pattern statistics data request) to the application data analytics enablement server 302 in order to be provided with slice usage statistics data. The first processing step 501 corresponds to the first step of the method according to the present invention.

In a second processing step 502, the application data analytics enablement server 302 transmits a (network) slice data retrieval request to the application layer-analytics and data repository function, A-ADRF, 303.

In a third processing step 503, the application layer-analytics and data repository function, A-ADRF, 303 transmits a (network) slice data retrieval response to the application data analytics enablement server 302.

In a fourth processing step 504, the application data analytics enablement server 302 transmits a (network) slice usage statistics data reply/response (or a (network) slice usage pattern statistics data reply/response) to the application data analytics enablement service consumer entity 301, 401. The fourth processing step 504 corresponds to the second step of the method according to the present invention.

In Figure 5, a communication diagram between the application data analytics enablement server 302, the network slice capability enablement server 301, and the vertical application layer server 401 is schematically shown in order to illustrate further aspects of the method according to the present invention.

In case of the situation or the scenario shown in Figure 5 (which is schematically represented, in Figure 2, by means of a dotted line between the vertical application layer server 401 and the application data analytics enablement server 302, via the network slice capability enablement server 301), the vertical application layer server 401 does not (directly) act as application data analytics enablement service consumer entity, i.e. it does not interact directly with the application data analytics enablement server 302 but it interacts with the network slice capability enablement server 301, and it is the network slice capability enablement server 301 that acts as application data analytics enablement service consumer entity towards the application data analytics enablement server 302, whereas the vertical application layer server 401 uses an NSCE-S reference point (or interface) towards the network slice capability enablement server 301 (and, especially, the network slice capability enablement server 301 uses a SEAL-X interface (or reference point) towards the application data analytics enablement server 302).

In a first processing step 601, the vertical application layer server 401 transmits, to the network slice capability enablement server 301, a network slice diagnostics request in order to be provided with network slice diagnostics data.

The first processing step 601 corresponds to the fourth step of the method according to the present invention.

In a second processing step 602, (network) slice-specific application performance statistics and/or (network) slice usage pattern statistics (data), especially related to service degradation, are determined and collected. This is done by either the network slice capability enablement server 301, or the application data analytics enablement server 302 or both. Especially, the second processing step 602 might comprise the first to fourth processing steps 501 to 504 represented in Figure 4, and, hence, corresponds to the first and second steps of the method according to the present invention.

In a third processing step 603 (of the communication shown in Figure 5), the network slice capability enablement server 301 correlates data and prepares a network slice diagnostics report.

In a fourth processing step 604 (of the communication shown in Figure 5), the network slice capability enablement server 301 transmits, to the vertical application layer server 401, a network slice diagnostics response in order that the vertical application layer server 401 receives the network slice diagnostics data.

The fourth processing step 604 corresponds to the firth step of the method according to the present invention.

Hence, according to the present invention, it is advantageously possible, by means of using the application data analytics enablement server 302, to retrieve statistics data, especially (network) slice-specific data, especially related to service degradation of network slices.

Especially according to the present invention, in the ADAE (application data analytics enablement) framework, A-DCCF and A-ADRF are able to be defined as functionalities within the internal ADAE architecture and are able to offer the following functionalities:
-- application layer-data collection and coordination function (A-DCCF) that coordinates the collection and distribution of data requested by the consumer (ADAE server); data collection coordination is supported by a A-DCCF 304. The application data analytics enablement server 302 is able to send requests for data to the A-DCCF 304 rather than directly to the data sources 309. The A-DCCF 304 may also perform data processing/abstraction and data preparation based on the vertical application layer server 401 requirements.
-- application layer-analytics and data repository function (A-ADRF) stores historical data and/or analytics data, i.e., data and/or analytics related to past time periods that has been obtained by the consumer (e.g. the application data analytics enablement server 302), i.e. after the consumer (i.e. the application data analytics enablement server 302) obtains data and/or analytics, it may store historical data and/or analytics in the A-ADRF. Whether the consumer directly contacts the A-ADRF or goes via the A-DCCF is based on configuration.

In such a scenario, the A-DCCF 304 is used to fetch data or put data into an application-level entity (e.g. A-ADRF, Data Source). Such A-DCCF 304 coordinates the collection and distribution of data requested by the application data analytics enablement server 302 (especially over ADCCF-1, ADAE-X as interfaces). The application data analytics enablement server 302 can also directly interact with the data sources 309 via ADAE-Y. Additionally, application layer-analytics and data repository function (A-ADRF) 303 is able to be used to store historical data and/or analytics, i.e., data and/or analytics related to past time periods that have been obtained by the application data analytics enablement server 302 (via AADRF-1) or other network functions or services, especially the network data analytics function, NWDAF. The application data analytics enablement server 302 especially is also able to fetch historical data from A-ADRF 303. Whether the application data analytics enablement server 302 directly contacts the A-ADRF or goes via the A-DCCF is based on configuration.

Data Sources can be 5GS data sources (5GC, OAM) or enablement layer data sources (SEAL, EEL) or external data sources at the DN side (VAL server/ EAS) and VAL UEs. A-DCCF and A-ADRF can be used only for interacting with certain data sources (e.g., 5GC, OAM) based on configuration, and can be hidden from the VAL layer.

Especially according to the present invention, in relation to network slices, the application data analytics enablement server 302 supports (network) slice-specific application performance analytics and/or slice usage pattern analytics.

According to the present invention, it is advantageously possible to provide procedures, service flows and APIs to extract historical data from the application data analytics enablement architecture (which historical data are stored in the ADAES architecture especially in the A-ADRDF), especially in case that specific statistics are needed for a certain time window in the past.

Once a service customer of the application data analytics enablement server 302 (i.e. an ADAES service consumer - that might be the network slice capability enablement server 301 or a vertical application layer server 401) subscribes to (or for) specific analytics, such service customer is able to receive notifications according to its subscription. The ADAES service consumer may not have a data storage (for example, the network slice capability enablement server 301 typically does not have dedicated data storage) for storing the specific notifications and/or statistics data. Once a specific check is needed (e.g. in case that a customer of application service provider ASP, or vertical application layer server 401 has complained about a service degradation, especially one having occurred in the past) the present invention provides a possibility that an ADAES consumer is able to request such data, especially historical data.

Hence, according to the present invention, procedures, information flows and APIs is provided via which the vertical/ASP is able to request and receive respective network slice information. The vertical application layer server 401 is able to act as an ADAES customer (as well as, alternatively or cumulatively, the network slice capability enablement server 302 could act as ADAES customer) and sends a request for information (which request comprises the specific type of information needed as well as the specific time window). Then, respectively, the application data analytics enablement server 302 is able to check with the A-DRDF 303 such as to be able to reply back to the vertical application layer server 401 by means of specific report data for the requested time window.

Furthermore according to the present invention, it is advantageously possible that the network slice capability enablement server 301 acts as the ADAES customer and provides network slice diagnostics reports to its customers, especially the vertical application layer server 401.

In such a situation, the network slice capability enablement client (i.e. part of the user equipment 20, analogous to the application data analytics enablement client 22 shown in Figure 2) communicates with the network slice capability enablement server 301 over the NSCE-UU reference point. The network slice capability enablement client provides the support for network slice capability enablement functions to the VAL client(s) 21 (as part of the user equipment 20) over the NSCE-C reference point (which, in this case, is used instead of the ADAE-C interface or reference point 22' as shown in Figure 2). The VAL server(s) 401 communicates with the network slice capability enablement server 301 over the NSCE-S reference point. It is assumed that the network slice capability enablement server 301 is deployed at the 5G system domain; especially it is assumed that the network slice capability enablement server 301 is able to have or to implement interfaces or reference points analogously to the interfaces or reference points 121', 122', 123' of the application data analytics enablement server 302 and shown in Figure 2 (and, thus taking - regarding these interfaces or reference points - the place of the application data analytics enablement server 302, shown in Figure 2, regarding the interface with the telecommunications network 100 (wherein, however, the ADAE-OAM interface or reference point 123' would be replaced by an NSCE-OAM interface or reference point to the operations and maintenance, OAM, entity or functionality of the core network 120); in such a situation, the dotted line, shown in Figure 2, between the network slice capability enablement server 301 and the application data analytics enablement server 302 especially realizes, or corresponds to, a SEAL-X interface or reference point). Hence, according to such an embodiment of the present invention, the network slice capability enablement server 301, acting as application function (AF), may communicate with the 5G core network 120 functions via the network exposure function, NEF, (N33) reference point (for interactions with network functions or services such as the policy and charging function, PCF, network slice admission control function, NSACF, etc.). The network slice capability enablement server 301 may also interact with operations and maintenance system, OAM system, over the NSCE-OAM reference point, as consumer in both NSaaS and NoP model defined in the clause 4.1.6 and clause 4.1.7 of 3GPP TS 28.530 (for Network Slice Provisioning capabilities, Performance Assurance, Fault Supervision etc.). Typically, OAM interfaces and/or network slice information is able to be exposed to an authorized (trusted) third-party (NSCE) only after a contract has been signed between the MNO and this third-party. The vertical application layer server 401 corresponds to any vertical application layer server, i.e. it corresponds to a generic name for the server application function of a specific vertical application layer service. In this context, the vertical application layer service is a generic name for any service offered by a vertical application layer service provider to their vertical application layer users, i.e. the vertical application layer user equipments such as user equipment 20.

According to such a scenario or embodiment, the reference point N33 (between the core network 120 and the network slice capability enablement server 301 that would be analogous to the 122' interface shown in Figure 2) supports the interactions between the network slice capability enablement server 301 and the network exposure function, NEF and is specified in 3GPP TS 23.501; this N33 interface or reference point is used for the network-based mechanism for slice re-mapping, where the network slice capability enablement server 301 is acting as application function (AF) and especially influences the user equipment route selection policy rules, URSP rules, for the application traffic per user equipment 20 by providing a guidance on the route selection parameters (especially including the S-NSSAI and DNN mapping), as specified in 3GPP TS 23.502 clause 4.15.6.10, 3GPP TS 23.503 clause 6.6.2.2, and 3GPP TS 23.548 clause 6.2.4.

The interface between the network slice capability enablement server 301 and the OAM system (of the core network 120) is generically referred to as NSCE-OAM reference point (between the core network 120 and the network slice capability enablement server 301 that would be analogous to the 123' interface shown in Figure 2). This reference point supports provisioning of management service as defined in clause 6.1, 3GPP TS 28.531.

According to the present invention, it is advantageously possible to address a situation such as: the vertical application layer server 401 or vertical/ASP service provider using the vertical application layer server 401 has estimated bad QoE (quality-of-experience) for a mobile user or service - e.g., either reported from a mobile user or service or detected by application, and the vertical application layer server 401 has identified that there is a specific event where the application has experienced service degradation (e.g. due to reported errors from the vertical application layer client 21 relating to a degraded service level (bad quality) and/or reported errors from application (such as, e.g., downgrade of communication, detected communication errors) and/or application fallback due to network slice communication service timeout).

According to the present invention, it is advantageously possible that, in such a situation, the vertical/ASP using the vertical application layer server 401 is able to get information from the network slice capability enablement service provider (slice service provider, i.e. the network slice capability enablement server 301) as to what is the reason/cause for the respective detected or reported bad service experience.

This is especially and advantageously possible, according to the present invention, by means of the network slice capability enablement server 301 providing specific procedures, information flows and APIs via which the vertical/ASP (or vertical application layer server 401) is able to request and receive the respective information: This means that, according to the present invention, the vertical application layer server 401 is able to send a request for information (network slice diagnostics request) about a specific event vertical application layer server 401 has detected (corresponding to the fourth step preceding the first step of the inventive method). Then the network slice capability enablement server 301 (acting as application data analytics enablement service consumer entity) checks with the application data analytics enablement server 302 about the specific reported error in a certain time window (of the past) (by means of the slice usage statistics data request towards the application data analytics enablement server 302 - corresponding to the first step of the inventive method - and a slice usage statistics data response back to the network slice capability enablement server 301 - corresponding to the second step of the inventive method) and is able to reply back to the vertical application layer server 401 (network slice diagnostics reply), i.e. corresponding to the fifth step of the inventive method subsequent to the second step.

## Claims

1. Method for using a service enabler architecture layer for verticals, SEAL, in a vertical application layer implementation, VAL implementation, for providing communication services to a user equipment (20), using a vertical application layer server (401) via a telecommunications network (100), for supporting and providing slice usage statistics data regarding at least one network slice used by the user equipment (20), wherein the user equipment (20) is a vertical application layer user equipment (20) comprising a vertical application layer client, VAL client, (21) and an application data analytics enablement client (22),
wherein the service enabler architecture layer for verticals comprises an application data analytics enablement server, ADAE server, (302) and a network slice capability enablement server (301) being responsible for or related to the at least one network slice, wherein the vertical application layer server (401) is adapted to interact with the application data analytics enablement server (302) via the network slice capability enablement server (301),
wherein, in order for supporting and for providing, by the application data analytics enablement server (302), slice usage statistics data towards an application data analytics enablement service consumer entity (301), the method comprises the following steps:
-- in a first step, the application data analytics enablement service consumer entity (301) transmits a slice usage statistics data request to the application data analytics enablement server (302) in order to be provided with slice usage statistics data, wherein the application data analytics enablement service consumer entity (301) is the network slice capability enablement server (301),
-- in a second step, the application data analytics enablement server (302) transmits a slice usage statistics data response to the application data analytics enablement service consumer entity (301), comprising slice usage pattern statistics data,
-- in a third step, the network slice capability enablement server (301) correlates data and prepares a network slice diagnostics report, to be provided as part of a network slice diagnostics response,
wherein, prior to the first step, the vertical application layer server (401), having identified a specific event where an application has experienced service degradation due to a reported error from the application, transmits a network slice diagnostics request to the network slice capability enablement server (301), said network slice diagnostics request indicating the specific event, and subsequent to the third step, the network slice capability enablement server (301) returns the network slice diagnostics response to the vertical application layer server (401), wherein the network slice capability enablement server (301) checks with the application data analytics enablement server (302) about the specific reported error in a certain time window and replies back to the vertical application layer server (401).

2. Method according to the preceding claim, wherein the first and second steps involve using, as an interface of or towards the application data analytics enablement server (302), an interface according to an SEAL-X reference point.

3. Method according to one of the preceding claims, wherein the first and second steps involve using the following information elements between the application data analytics enablement service consumer (301, 401) and the application data analytics enablement server (302):
-- as mandatory parts of the slice usage statistics data request: a consumer identifier information, a slice usage statistics data identifier information, a vertical application layer service identifier information, a network slice identifier information, a start time information, and an end time information,
-- as mandatory parts of the slice usage statistics data response: a result information, a slice usage statistics data identifier information, and a network slice identifier information,
-- as optional parts of the slice usage statistics data request: a network slice-related parameter information, a data network name information, a user equipment-related identifier information, and an area of interest information,
-- as optional parts of the slice usage statistics data response: a data output information, and a failure cause information.

4. Method according to one of the preceding claims, wherein, in a fourth step subsequent to the first step and preceding the second step, the application data analytics enablement server (302) transmits, to an application layer analytical data repository function, A-ADRF, (303), a network slice data retrieval request in order to be provided with the requested data, and the A-ADRF (303) transmits, to the application data analytics enablement server (302), a network slice data retrieval response in order to provide the requested data to the application data analytics enablement server (302).

5. System for using a service enabler architecture layer for verticals, SEAL, in a vertical application layer implementation, VAL implementation, for providing communication services to a user equipment (20), using a vertical application layer server (401) via the telecommunications network (100), for supporting and providing slice usage statistics data regarding at least one network slice used by the userequipment (20), wherein the system comprises the vertical application layer server (401), a network slice capability enablement server (301), and an application data analytics enablement server, ADAE server, (302), wherein the user equipment (20) is a vertical application layer user equipment (20) comprising a vertical application layer client, VAL client, (21) and an application data analytics enablement client (22),
wherein the service enabler architecture layer for verticals comprises the application data analytics enablement server (302) and the network slice capability enablement server (301) being responsible for or related to the at least one network slice, wherein the vertical application layer server (401) is adapted to interact with the application data analytics enablement server (302) via the network slice capability enablement server (301),
wherein, in order for supporting and for providing, by the application data analytics enablement server (302), slice usage statistics data towards an application data analytics enablement service consumer entity (301), the system or telecommunications network (100) is configured such that:
-- the application data analytics enablement service consumer entity (301) transmits a slice usage statistics data request to the application data analytics enablement server (302) in order to be provided with slice usage pattern statistics data, wherein the application data analytics enablement service consumer entity (301) is the network slice capability enablement server (301),
-- the application data analytics enablement server (302) transmits a slice usage statistics data response to the application data analytics enablement service consumer entity (301), comprising slice usage statistics data,
-- in a third step, the network slice capability enablement server (301) correlates data and prepares a network slice diagnostics report, to be provided as part of a network slice diagnostics response,
wherein, prior to the first step, the vertical application layer server (401), having identified a specific event where an application has experienced service degradation due to a reported error from the application, transmits a network slice diagnostics request to the network slice capability enablement server (301), said network slice diagnostics request indicating the specific event, and subsequent to the third step, the network slice capability enablement server (301) returns the network slice diagnostics response to the vertical application layer server (401), wherein the network slice capability enablement server (301) checks with the application data analytics enablement server (302) about the specific reported error in a certain time window and replies back to the vertical application layer server (401).

6. Program comprising a computer readable program code which, when executed on a system according to claim 5, causes the system to perform a method according one of claims 1 to 4.

7. Computer-readable medium comprising instructions which when executed on a system according to claim 5, causes the system to perform a method according to one of claims 1 to 4.

## Patentansprüche

1. Verfahren zur Verwendung einer Dienstaktivierungsarchitekturebene für Vertikale, SEAL, in einer vertikalen Anwendungsschicht-Implementierung, VAL-Implementierung, zur Bereitstellung von Kommunikationsdiensten an ein Benutzergerät (20), unter Verwendung eines vertikalen Anwendungsschichtservers (401) über ein Telekommunikationsnetzwerk (100), zur Unterstützung und Bereitstellung von Slice-Nutzungsstatistikdaten bezüglich mindestens eines Netzwerk-Slice, der von dem Benutzergerät (20) verwendet wird, wobei das Benutzergerät (20) ein vertikales Anwendungsschicht-Benutzergerät (20) ist, das einen vertikalen Anwendungsschicht-Client, VAL-Client, (21) und einen Anwendungsdatenanalyse-Aktivierungs-Client (22) umfasst,
wobei die Dienstaktivierungsarchitekturebene für Vertikale einen Anwendungsdatenanalyse-Aktivierungsserver, ADAE-Server, (302) und einen Netzwerk-Slice-Fähigkeits-Aktivierungsserver (301) umfasst, der für den mindestens einen Netzwerk-Slice verantwortlich ist oder mit diesem in Beziehung steht, wobei der vertikale Anwendungsschichtserver (401) so ausgestaltet ist, dass er mit dem Anwendungsdatenanalyse-Aktivierungsserver (302) über den Netzwerk-Slice-Fähigkeits-Aktivierungsserver (301) interagiert,
wobei zur Unterstützung und zur Bereitstellung von Slice-Nutzungsstatistikdaten durch den Anwendungsdatenanalyse-Aktivierungsserver (302) an eine Anwendungsdatenanalyse-Aktivierungs-Dienstverbraucher-Entität (301) das Verfahren die folgenden Schritte umfasst:
-- in einem ersten Schritt überträgt die Anwendungsdatenanalyse-Aktivierungs-Dienstverbraucher-Entität (301) eine Slice-Nutzungsstatistikdatenanfrage an den Anwendungsdatenanalyse-Aktivierungsserver (302), um mit Slice-Nutzungsstatistikdaten versorgt zu werden, wobei die Anwendungsdatenanalyse-Aktivierungs-Dienstverbraucher-Entität (301) der Netzwerk-Slice-Fähigkeits-Aktivierungsserver (301) ist,
-- in einem zweiten Schritt überträgt der Anwendungsdatenanalyse-Aktivierungsserver (302) eine Slice-Nutzungsstatistikdatenantwort an die Anwendungsdatenanalyse-Aktivierungs-Dienstverbraucher-Entität (301), die Slice-Nutzungsmusterstatistikdaten umfasst,
-- in einem dritten Schritt korreliert der Netzwerk-Slice-Fähigkeits-Aktivierungsserver (301) Daten und erstellt einen Netzwerk-Slice-Diagnosebericht, der als Teil einer Netzwerk-Slice-Diagnoseantwort bereitgestellt werden soll,
wobei vor dem ersten Schritt der vertikale Anwendungsschichtserver (401), nachdem er ein spezifisches Ereignis identifiziert hat, bei dem eine Anwendung eine Dienstbeeinträchtigung aufgrund eines gemeldeten Fehlers von der Anwendung erfahren hat, eine Netzwerk-Slice-Diagnoseanfrage an den Netzwerk-Slice-Fähigkeits-Aktivierungsserver (301) überträgt, wobei die Netzwerk-Slice-Diagnoseanfrage das spezifische Ereignis angibt, und nach dem dritten Schritt der Netzwerk-Slice-Fähigkeits-Aktivierungsserver (301) die Netzwerk-Slice-Diagnoseantwort an den vertikalen Anwendungsschichtserver (401) zurückgibt, wobei der Netzwerk-Slice-Fähigkeits-Aktivierungsserver (301) bei dem Anwendungsdatenanalyse-Aktivierungsserver (302) bezüglich des spezifischen gemeldeten Fehlers in einem bestimmten Zeitfenster nachfragt und dem vertikalen Anwendungsschichtserver (401) antwortet.

2. Verfahren nach dem vorhergehenden Anspruch, wobei der erste und der zweite Schritt die Verwendung einer Schnittstelle gemäß einem SEAL-X-Referenzpunkt als Schnittstelle des oder zum Anwendungsdatenanalyse-Aktivierungsserver (302) beinhalten.

3. Verfahren nach einem der vorhergehenden Ansprüche, wobei der erste und der zweite Schritt die Verwendung der folgenden Informationselemente zwischen dem Anwendungsdatenanalyse-Aktivierungs-Dienstverbraucher (301, 401) und dem Anwendungsdatenanalyse-Aktivierungsserver (302) beinhalten:
-- als obligatorische Teile der Slice-Nutzungsstatistikdatenanfrage: eine Verbraucher-Identifikationsinformation, eine Slice-Nutzungsstatistikdaten-Identifikationsinformation, eine vertikale Anwendungsschicht-Dienst-Identifikationsinformation, eine Netzwerk-Slice-Identifikationsinformation, eine Startzeitinformation und eine Endzeitinformation,
**--** als obligatorische Teile der Slice-Nutzungsstatistikdatenantwort: eine Ergebnisinformation, eine Slice-Nutzungsstatistikdaten-Identifikationsinformation und eine Netzwerk-Slice-Identifikationsinformation,
-- als optionale Teile der Slice-Nutzungsstatistikdatenanfrage: eine Netzwerk-Slicebezogene Parameterinformation, eine Datennetzwerknameninformation, eine Benutzergerät-bezogene Identifikationsinformation und eine Interessenbereichsinformation,
-- als optionale Teile der Slice-Nutzungsstatistikdatenantwort: eine Datenausgabeinformation und eine Fehlerursacheninformation.

4. Verfahren nach einem der vorhergehenden Ansprüche, wobei in einem vierten Schritt nach dem ersten Schritt und vor dem zweiten Schritt der Anwendungsdatenanalyse-Aktivierungsserver (302) an eine Anwendungsschicht-analytische Daten-Repository-Funktion, A-ADRF, (303) eine Netzwerk-Slice-Datenabrufanfrage überträgt, um mit den angeforderten Daten versorgt zu werden, und die A-ADRF (303) an den Anwendungsdatenanalyse-Aktivierungsserver (302) eine Netzwerk-Slice-Datenabrufantwort überträgt, um die angeforderten Daten an den Anwendungsdatenanalyse-Aktivierungsserver (302) bereitzustellen.

5. System zur Verwendung einer Dienstaktivierungsarchitekturebene für Vertikale, SEAL, in einer vertikalen Anwendungsschicht-Implementierung, VAL-Implementierung, zur Bereitstellung von Kommunikationsdiensten an ein Benutzergerät (20), unter Verwendung eines vertikalen Anwendungsschichtservers (401) über das Telekommunikationsnetzwerk (100), zur Unterstützung und Bereitstellung von Slice-Nutzungsstatistikdaten bezüglich mindestens eines Netzwerk-Slice, der von dem Benutzergerät (20) verwendet wird, wobei das System den vertikalen Anwendungsschichtserver (401), einen Netzwerk-Slice-Fähigkeits-Aktivierungsserver (301) und einen Anwendungsdatenanalyse-Aktivierungsserver, ADAE-Server, (302) umfasst, wobei das Benutzergerät (20) ein vertikales Anwendungsschicht-Benutzergerät (20) ist, das einen vertikalen Anwendungsschicht-Client, VAL-Client, (21) und einen Anwendungsdatenanalyse-Aktivierungs-Client (22) umfasst,
wobei die Dienstaktivierungsarchitekturebene für Vertikale den Anwendungsdatenanalyse-Aktivierungsserver (302) und den Netzwerk-Slice-Fähigkeits-Aktivierungsserver (301) umfasst, der für den mindestens einen Netzwerk-Slice verantwortlich ist oder mit diesem in Beziehung steht, wobei der vertikale Anwendungsschichtserver (401) so ausgestaltet ist, dass er mit dem Anwendungsdatenanalyse-Aktivierungsserver (302) über den Netzwerk-Slice-Fähigkeits-Aktivierungsserver (301) interagiert,
wobei zur Unterstützung und zur Bereitstellung von Slice-Nutzungsstatistikdaten durch den Anwendungsdatenanalyse-Aktivierungsserver (302) an eine Anwendungsdatenanalyse-Aktivierungs-Dienstverbraucher-Entität (301) das System oder Telekommunikationsnetzwerk (100) so konfiguriert ist, dass:
-- die Anwendungsdatenanalyse-Aktivierungs-Dienstverbraucher-Entität (301) eine Slice-Nutzungsstatistikdatenanfrage an den Anwendungsdatenanalyse-Aktivierungsserver (302) überträgt, um mit Slice-Nutzungsmusterstatistikdaten versorgt zu werden, wobei die Anwendungsdatenanalyse-Aktivierungs-Dienstverbraucher-Entität (301) der Netzwerk-Slice-Fähigkeits-Aktivierungsserver (301) ist,
-- der Anwendungsdatenanalyse-Aktivierungsserver (302) eine Slice-Nutzungsstatistikdatenantwort an die Anwendungsdatenanalyse-Aktivierungs-Dienstverbraucher-Entität (301) überträgt, die Slice-Nutzungsstatistikdaten umfasst,
**--** in einem dritten Schritt der Netzwerk-Slice-Fähigkeits-Aktivierungsserver (301) Daten korreliert und einen Netzwerk-Slice-Diagnosebericht erstellt, der als Teil einer Netzwerk-Slice-Diagnoseantwort bereitgestellt werden soll,
wobei vor dem ersten Schritt der vertikale Anwendungsschichtserver (401), nachdem er ein spezifisches Ereignis identifiziert hat, bei dem eine Anwendung eine Dienstbeeinträchtigung aufgrund eines gemeldeten Fehlers von der Anwendung erfahren hat, eine Netzwerk-Slice-Diagnoseanfrage an den Netzwerk-Slice-Fähigkeits-Aktivierungsserver (301) überträgt, wobei die Netzwerk-Slice-Diagnoseanfrage das spezifische Ereignis angibt, und nach dem dritten Schritt der Netzwerk-Slice-Fähigkeits-Aktivierungsserver (301) die Netzwerk-Slice-Diagnoseantwort an den vertikalen Anwendungsschichtserver (401) zurückgibt, wobei der Netzwerk-Slice-Fähigkeits-Aktivierungsserver (301) bei dem Anwendungsdatenanalyse-Aktivierungsserver (302) bezüglich des spezifischen gemeldeten Fehlers in einem bestimmten Zeitfenster nachfragt und dem vertikalen Anwendungsschichtserver (401) antwortet.

6. Programm, umfassend einen computerlesbaren Programmcode, der, wenn er auf einem System nach Anspruch 5 ausgeführt wird, das System veranlasst, ein Verfahren nach einem der Ansprüche 1 bis 4 auszuführen.

7. Computerlesbares Medium, umfassend Anweisungen, die, wenn sie auf einem System nach Anspruch 5 ausgeführt werden, das System veranlassen, ein Verfahren nach einem der Ansprüche 1 bis 4 auszuführen.

## Revendications

1. Procédé d'utilisation d'une couche d'architecture d'activation de services pour les verticaux, SEAL, dans une implémentation de couche d'application verticale, implémentation VAL, pour fournir des services de communication à un équipement utilisateur (20), en utilisant un serveur de couche d'application verticale (401) via un réseau de télécommunications (100), pour supporter et fournir des données statistiques d'utilisation de tranche concernant au moins une tranche de réseau utilisée par l'équipement utilisateur (20), où l'équipement utilisateur (20) est un équipement utilisateur de couche d'application verticale (20) comprenant un client de couche d'application verticale, client VAL, (21) et un client d'activation d'analyse de données d'application (22),
où la couche d'architecture d'activation de services pour les verticaux comprend un serveur d'activation d'analyse de données d'application, serveur ADAE, (302) et un serveur d'activation de capacité de tranche de réseau (301) étant responsable de ou lié à la au moins une tranche de réseau, où le serveur de couche d'application verticale (401) est adapté pour interagir avec le serveur d'activation d'analyse de données d'application (302) via le serveur d'activation de capacité de tranche de réseau (301),
où, afin de supporter et de fournir, par le serveur d'activation d'analyse de données d'application (302), des données statistiques d'utilisation de tranche vers une entité consommatrice de service d'activation d'analyse de données d'application (301), le procédé comprend les étapes suivantes :
-- dans une première étape, l'entité consommatrice de service d'activation d'analyse de données d'application (301) transmet une demande de données statistiques d'utilisation de tranche au serveur d'activation d'analyse de données d'application (302) afin d'être fournie en données statistiques d'utilisation de tranche, où l'entité consommatrice de service d'activation d'analyse de données d'application (301) est le serveur d'activation de capacité de tranche de réseau (301),
**--** dans une deuxième étape, le serveur d'activation d'analyse de données d'application (302) transmet une réponse de données statistiques d'utilisation de tranche à l'entité consommatrice de service d'activation d'analyse de données d'application (301), comprenant des données statistiques de modèle d'utilisation de tranche,
-- dans une troisième étape, le serveur d'activation de capacité de tranche de réseau (301) corrèle les données et prépare un rapport de diagnostic de tranche de réseau, à fournir dans le cadre d'une réponse de diagnostic de tranche de réseau,
où, avant la première étape, le serveur de couche d'application verticale (401), ayant identifié un événement spécifique où une application a subi une dégradation de service en raison d'une erreur signalée par l'application, transmet une demande de diagnostic de tranche de réseau au serveur d'activation de capacité de tranche de réseau (301), ladite demande de diagnostic de tranche de réseau indiquant l'événement spécifique, et après la troisième étape, le serveur d'activation de capacité de tranche de réseau (301) retourne la réponse de diagnostic de tranche de réseau au serveur de couche d'application verticale (401), où le serveur d'activation de capacité de tranche de réseau (301) vérifie auprès du serveur d'activation d'analyse de données d'application (302) concernant l'erreur spécifique signalée dans une fenêtre temporelle déterminée et répond au serveur de couche d'application verticale (401).

2. Procédé selon la revendication précédente, où les première et deuxième étapes impliquent l'utilisation, en tant qu'interface du ou vers le serveur d'activation d'analyse de données d'application (302), d'une interface selon un point de référence SEAL-X.

3. Procédé selon l'une des revendications précédentes, où les première et deuxième étapes impliquent l'utilisation des éléments d'information suivants entre le consommateur de service d'activation d'analyse de données d'application (301, 401) et le serveur d'activation d'analyse de données d'application (302) :
-- en tant que parties obligatoires de la demande de données statistiques d'utilisation de tranche : une information d'identification du consommateur, une information d'identification de données statistiques d'utilisation de tranche, une information d'identification de service de couche d'application verticale, une information d'identification de tranche de réseau, une information d'heure de début et une information d'heure de fin,
-- en tant que parties obligatoires de la réponse de données statistiques d'utilisation de tranche : une information de résultat, une information d'identification de données statistiques d'utilisation de tranche et une information d'identification de tranche de réseau,
-- en tant que parties optionnelles de la demande de données statistiques d'utilisation de tranche : une information de paramètre liée à la tranche de réseau, une information de nom de réseau de données, une information d'identification liée à l'équipement utilisateur et une information de zone d'intérêt,
**--** en tant que parties optionnelles de la réponse de données statistiques d'utilisation de tranche : une information de sortie de données et une information de cause de défaillance.

4. Procédé selon l'une des revendications précédentes, où, dans une quatrième étape postérieure à la première étape et antérieure à la deuxième étape, le serveur d'activation d'analyse de données d'application (302) transmet, à une fonction de référentiel de données analytiques de couche d'application, A-ADRF, (303), une demande de récupération de données de tranche de réseau afin d'être fourni avec les données demandées, et l'A-ADRF (303) transmet, au serveur d'activation d'analyse de données d'application (302), une réponse de récupération de données de tranche de réseau afin de fournir les données demandées au serveur d'activation d'analyse de données d'application (302).

5. Système d'utilisation d'une couche d'architecture d'activation de services pour les verticaux, SEAL, dans une implémentation de couche d'application verticale, implémentation VAL, pour fournir des services de communication à un équipement utilisateur (20), en utilisant un serveur de couche d'application verticale (401) via le réseau de télécommunications (100), pour supporter et fournir des données statistiques d'utilisation de tranche concernant au moins une tranche de réseau utilisée par l'équipement utilisateur (20), où le système comprend le serveur de couche d'application verticale (401), un serveur d'activation de capacité de tranche de réseau (301) et un serveur d'activation d'analyse de données d'application, serveur ADAE, (302), où l'équipement utilisateur (20) est un équipement utilisateur de couche d'application verticale (20) comprenant un client de couche d'application verticale, client VAL, (21) et un client d'activation d'analyse de données d'application (22),
où la couche d'architecture d'activation de services pour les verticaux comprend le serveur d'activation d'analyse de données d'application (302) et le serveur d'activation de capacité de tranche de réseau (301) étant responsable de ou lié à la au moins une tranche de réseau, où le serveur de couche d'application verticale (401) est adapté pour interagir avec le serveur d'activation d'analyse de données d'application (302) via le serveur d'activation de capacité de tranche de réseau (301), où, afin de supporter et de fournir, par le serveur d'activation d'analyse de données d'application (302), des données statistiques d'utilisation de tranche vers une entité consommatrice de service d'activation d'analyse de données d'application (301), le système ou le réseau de télécommunications (100) est configuré de telle sorte que :
**--** l'entité consommatrice de service d'activation d'analyse de données d'application (301) transmet une demande de données statistiques d'utilisation de tranche au serveur d'activation d'analyse de données d'application (302) afin d'être fournie en données statistiques de modèle d'utilisation de tranche, où l'entité consommatrice de service d'activation d'analyse de données d'application (301) est le serveur d'activation de capacité de tranche de réseau (301),
-- le serveur d'activation d'analyse de données d'application (302) transmet une réponse de données statistiques d'utilisation de tranche à l'entité consommatrice de service d'activation d'analyse de données d'application (301), comprenant des données statistiques d'utilisation de tranche,
-- dans une troisième étape, le serveur d'activation de capacité de tranche de réseau (301) corrèle les données et prépare un rapport de diagnostic de tranche de réseau, à fournir dans le cadre d'une réponse de diagnostic de tranche de réseau,
où, avant la première étape, le serveur de couche d'application verticale (401), ayant identifié un événement spécifique où une application a subi une dégradation de service en raison d'une erreur signalée par l'application, transmet une demande de diagnostic de tranche de réseau au serveur d'activation de capacité de tranche de réseau (301), ladite demande de diagnostic de tranche de réseau indiquant l'événement spécifique, et après la troisième étape, le serveur d'activation de capacité de tranche de réseau (301) retourne la réponse de diagnostic de tranche de réseau au serveur de couche d'application verticale (401), où le serveur d'activation de capacité de tranche de réseau (301) vérifie auprès du serveur d'activation d'analyse de données d'application (302) concernant l'erreur spécifique signalée dans une fenêtre temporelle déterminée et répond au serveur de couche d'application verticale (401).

6. Programme comprenant un code de programme lisible par ordinateur qui, lorsqu'il est exécuté sur un système selon la revendication 5, amène le système à exécuter un procédé selon l'une des revendications 1 à 4.

7. Support lisible par ordinateur comprenant des instructions qui, lorsqu'elles sont exécutées sur un système selon la revendication 5, amènent le système à exécuter un procédé selon l'une des revendications 1 à 4.
